# EUROPÄISCHE PATENTSCHRIFT

(11) **EP 1 533 157 B1**
(45) Veröffentlichungstag und Bekanntmachung des Hinweises auf die Patenterteilung: **12.01.2011**
(21) Anmeldenummer: 04027146.2
(22) Anmeldetag: 16.11.2004
(51) Int. Cl.: B60J 1/20

(54) **Kraftfahrzeugrollo mit vereinfachter Ankoppelung der Führungsschienen**
Vehicle roller blind with simplified coupling mechansim of guide rails
Store à enrouleur pour véhicule avec un méchanisme d'accouplement simplifié pour les rails de guidage

(30) Priorität: 18.11.2003 DE 10353778
(43) Veröffentlichungstag der Anmeldung: 25.05.2005
(73) Patentinhaber: BOS GmbH & Co. KG, 73760 Ostfildern (DE)
(72) Erfinder: Weinbrenner, Harry, 73760 Ostfildern (DE)
(74) Vertreter: Rüger, Barthelt & Abel Patentanwälte

(56) Entgegenhaltungen:
- EP-A1- 1 215 063
- EP-A2- 0 237 845
- DE-A1- 3 415 930
- DE-A1- 10 201 786

## Beschreibung

Aus der Praxis sind Heckscheibenrollos für Kraftfahrzeuge bekannt, bei denen die Rollobahn aus einem Auszugsschlitz aus der Hutablage auftaucht. Die Rollobahn wird hierbei von einer Wickelwelle abgezogen, die unterhalb der Hutablage drehbar gelagert ist.

Um die Rollobahn vor dem Heckfenster aufzuspannen, ist an der von der Wickelwelle abliegenden Kante der Rollobahn ein Auszugsprofil befestigt. Das Auszugsprofil wird an beiden Enden in Führungsschienen geführt, die neben den seitlichen Rändern der Heckscheibe verlaufen.

Bei all diesen Heckscheibenrollos ist die Montage der Führungsschienen, die etwa rechtwinklig zu der Achse der Wickelwelle verlaufen, problematisch.

Es wurde bereits versucht, die Führungsschienen über ein Scharnier mit einem Führungsschienenstummel zu verbinden, der seitens des Herstellers für das Heckscheibenrollo bereits fest mit der Wickelwelle bzw. deren Lagereinrichtung verbunden ist.

Eine solche Lösung beschränkt sich auf Ausführungen, bei denen die jeweilige Führungsschiene ein von den Seitenverkleidungen im Wesentlichen unabhängiges Teil darstellt. Diese Form der Verbindung kann nicht bei Heckfensterrollos verwendet werden, bei denen die Führungsschiene integraler oder integrierter Bestandteil der Innenauskleidung des Kraftfahrzeugs ist, beispielsweise der Verkleidung der hinteren Säule, die an das Heckfenster angrenzt.

Aus der EP 1 215 063 A1 ist ferner ein Heckscheibenrollo mit Steckverbindung für die Führungsschienen bekannt. Das Heckscheibenrollo weist eine drehbar gelagerte Wickel - welle auf, die in zwei Lagerböcken_,drehbar, gelagert ist. Es ist eine Rollobahn vorgesehen, die mit einer Kante an der Wickelwelle befestigt ist und deren andere Kante an einem Auszugsprofil verankert ist. Weiter sind zwei Führungsschienen vorgesehen in denen die beiden Enden des Auszugsprofils geführt sind. Die Führungsschienen sind an_ihrem der Wickelwelle benachbarten Ende als (ein erstes) Steckmittel ausgebildet. Die oben genannten Lagerböcke bilden zwei Sockeleinrichtungen die jeweils eine Lagereinrichtung für das jeweilige Ende der Wickelwelle aufweisen. Außerdem halten die Sackeleinrichtungen ein Rohrende, das (ein zweites) Steckmittel bildet. Das erste und das zweite Steckmittel bilden zusammen eine Kuppeleinrichtung. Die Steckmittel sind zueinander komplementär ausgebildet und miteinander kuppelbar.

Die Lagerböcke werden vor der Montage durch die Führungsrohre miteinander verbunden, durch die die Schubglieder zum Betätigen des Auszugspriegels vom Antriebsmotor zur Führungsschiene geführt sind. Jedes Führungsrohr ist auf der Auslaufseite führungsschienenartig ausgebildet, d.h., es enthält einen seitlichen Schlitz, durch den der Zugspriegel in die Führungsschiene bzw. das Führungsrohr hineinragen kann. Hierdurch entsteht eine Baueinheit, die ein kurzes Stück Führungsschiene zur Aufnahme des Zugspriegels und die Wickelwelle sowie den Antriebsmotor umfasst. Dieses Gebilde ist im wesentlichen länglich. Die eigentlichen Führungsschienen, die zur Führung des Zugspriegels an den Seitenkanten des Heckfenster dienen, werden auf das Führungsrohr bei der Montage aufgesteckt.

Die Art der Steckverbindung lässt keinerlei Winkelabweichung zwischen der Achse des Führungsrohrs am Lagerbock und der Führungsschiene zu.

Ausgehend hiervon ist es Aufgabe der Erfindung, ein Heckscheibenrollo zu schaffen, bei dem die Führungsschienen während der Montage im Fahrzeug angesteckt werden können, wobei Winkelabweichungen gegenüber den theoretischen Konstruktionsmaßen möglich sind.

Diese Aufgabe wird erfindungsgemäß mit einem Fensterrollo mit den Merkmalen des Anspruches 1 gelöst.

Zu dem neuen Fensterrollo gehört in der üblichen Weise eine Wickelwelle, die drehbar im Fahrzeug gelagert ist. An der Wickelwelle ist die Rollobahn mit einer Kante angebracht, deren andere Kante mit einem Auszugsprofil versehen ist.

Das Auszugsprofil wird an wenigstens einem Ende in einer Führungsschiene geführt, die in der Nähe der Wickelwelle beginnt und von dort wegführt. Die Führungsschiene folgt der Kontur des seitlichen Randes der Heckscheibe.

Um die Montage zu vereinfachen, ist die Führungsschiene mit einem ersten Steckmittel versehen, das sich an demjenigen Ende der Führungsschiene befindet, das der Wickelwelle benachbart ist.

Ferner gehört zu dem neuen Fensterrollo eine Sockeleinrichtung, in der sich wenigstens eine Lagereinrichtung für wenigstens ein Ende der Wickelwelle befindet. Diese Sockeleinrichtung ist außerdem mit einer Fassung versehen, in der eine Kuppeleinrichtung sitzt, die mit einem zweiten Steckmittel versehen ist. Das zweite Steckmittel ist zu dem ersten Steckmittel der Führungsschiene komplementär und mit diesem kuppelbar. Hierdurch wird eine sehr leichte montierbare Anordnung geschaffen. Durch das Gestalten der einzelnen Elemente wird die Richtung und die Positionierung vorgegeben, unter der die Führungsschiene mit der Sockeleinrichtung verbunden wird. Dadurch wird es möglich, das Auszugsprofil bereits bei der Montage im Bereich der Sockeleinrichtung vor zu positionieren, um sich spätere Einfädelarbeiten zu ersparen.

Um das Fensterrollo von Ferne betätigen zu können, umfasst die Antriebseinrichtung einen Elektromotor und eine Federeinrichtung. Der Elektromotor kann mit der Wickelwelle gekoppelt sein, wenn die Federeinrichtung am Auszugsprofil angreift. Die kinematische Umkehrung ist ebenfalls möglich, indem die Federeinrichtung als Federmotor mit der wickelwelle gekuppelt ist, während der Elektromotor über Betätigungsglieder in dem Auszugsprofil gekuppelt ist.

Die Führung des Auszugsprofils wird besonders zuverlässig, wenn die Führungsschiene eine hinterschnittene Führungsnut aufweist. Die hinterschnittene Führungsnut kann sich aus einer Nutenkammer und einem Nutenschlitz zusammensetzen, über den die Nutenkammer von außen her zugänglich ist, wobei die lichte Weite der Nutenkammer größer als die lichte Weite des Schlitzes ist.

Die Führungsnut weist über die Länge der Führungsschiene konstantes Querschnittsprofil auf.

Die Führungsschiene kann mit einem Seitenverkleidungsteil des Fahrzeugs verbunden sein, oder, zumindest abschnittsweise, Bestandteil des Seitenverkleidungsteil eines Kraftfahrzeugs sein.

Eine besonders einfache Verbindung zwischen der Führungsschiene und dem Kupplungsmittel ergibt sich, wenn das erste Steckmittel steckerförmig gestaltet ist. Dabei wird das Einführen vereinfacht, wenn sich das erste Steckmittel zum freien Ende hin verjüngt.

Die Verbindung wird besonders robust, wenn das erste Steckmittel eine steckerförmige Gestalt aufweist, die sich aus zwei Abschnitten zusammensetzt, von denen der eine dem freien Ende unmittelbar benachbart ist und einen kleineren Durchmesser aufweist als der, der vom freien Ende weiter abliegt, wobei die beiden Abschnitte über eine Konus- oder Kegelfläche ineinander übergehen.

Sehr platzsparend werden die Verhältnisse, wenn sich die Führungsnut durch das erste Steckmittel hindurch fortsetzt.

Winkelfehler zwischen der Führungsschiene und den sonstigen karosseriefesten Teilen des Fensterrollos werden erfindungsgemäß dadurch ausgeglichen, dass das Kuppelmittel gegenüber der Sockeleinrichtung schwenk- beweglich ist.

Um die Beweglichkeit zu erreichen, kann die Fassung für die Kuppeleinrichtung mit der Sockeleinrichtung über einen federelastischen Stiel verbunden sein. Der federelastische Stiel kann so gestaltet sein, dass er eine Bewegung der Fassung in Richtung parallel zu der Längsachse der Wickelwelle ermöglicht oder auch parallel dazu oder in beiden Richtungen.

Um eine Überlastung des Stiels zu vermeiden, insbesondere dann, wenn die beiden Steckmittel zusammengesteckt werden, ist zweckmäßigerweise die Bewegung der Fassung in Richtung auf die Wickelwelle zu bzw. von dieser weg durch Anschläge formschlüssig begrenzt.

Winkelfehler und linearer Versatz der Führungsschiene gegenüber der Sockeleinrichtung können leicht kompensiert werden, wenn die Sockeleinrichtung mit der Kuppeleinrichtung derart verbunden ist, dass die Kuppeleinrichtung bezüglich zweier voneinander beabstandeter und zu der Achse der Wickelwelle paralleler Achsen schwenkbar ist. Mit Hilfe der einen Schwenkachse kann die Fassung, auf der die Kuppeleinrichtung sitzt, von der Wickelwelle weg bewegt werden, um einen Versatz zu kompensieren, während die zweite Achse die Winkeleinstellung der Steckmittel der Kuppeleinrichtung gegenüber den Steckmitteln der Führungsschiene kompensiert.

Platzsparende Verhältnisse werden erreicht, wenn die Fassung so gestaltet und angeordnet ist, dass sie ein Vorbeilaufen des Auszugsprofils an der Fassung nicht behindert. Es ist dadurch auch möglich, bereits vor der Montage des Seitenfensterrollos im Fahrzeug das Auszugsprofil in der Sockeleinrichtung zu halten, noch ehe die Führungsschiene angesteckt ist.

Die gewünschte Gelenkigkeit wird einfach erreicht, wenn die Fassung die Gestalt einer Kugelpfanne aufweist, deren Innenfläche eine Kugelzone ist, die in einem Bereich in Richtung parallel zu der Längsachse der Wickelwelle offen ist.

Um die Fassung formschlüssig unverlierbar mit den Kuppeleinrichtung zu verbinden, sind an der Fassung formschlüssige Rastmittel vorhanden.

Das Kuppelmittel bildet einen Kugelkopf, der mit der Fassung verbindbar ist.

Die Führungsnut für das Auszugsprofil setzt sich zweckmäßigerweise ein Stück weit in die Kuppeleinrichtung fort. Dies ermöglicht das Auszugsprofil vor der Montage des Seitenfensterrollos im Fahrzeug in der Kuppeleinrichtung zu parken.

Die Kuppeleinrichtung trägt einen an dem kugelförmigen Kopf anschließenden Schaft auf, dessen Durchmesser kleiner ist als der Durchmesser des Kugelkopfes. Der Schaft ist im einfachsten Falle rohrförmig und dient sowohl als ein Stück Führungsschiene als auch der Verbindung mit einem flexiblen Rohr, das zur Führung eines zugehörigen Betätigungsgliedes dient, über das das Auszugsprofil mit der Antriebseinrichtung verbunden ist.

Die Sockeleinrichtung umfasst bei Heckscheibenrollos, die beidseitig der Rollobahn Führungsschienen aufweist, zwei Endstücke, die über eine Brücke oder ein Verbindungsmittel miteinander verbunden sind. Die beiden Endstücke sind zueinander spiegelsymmetrisch.

Die Verbindungsbrücke kann zur Befestigung eines Antriebsmotors dienen.

Die weiter oben erläuterte Fassung ist im einfachsten Falle mit dem jeweils zugehörigen Endstück vorzugsweise einstückig verbunden.

Die Kuppeleinrichtung weist Rastmittel auf, um die Steckverbindung zwischen der Kuppeleinrichtung und der Führungsschiene gegen ungewolltes Trennen während des Betriebs zu sichern.

Eine Begrenzungseinrichtung kann vorgesehen sein, um die Relativbewegung zwischen der Fassung und der Kuppeleinrichtung zu begrenzen. Diese Begrenzungseinrichtung kann aus einem Zapfen und einer Öse bestehen, wobei der Zapfen an der Kuppeleinrichtung und die Öse im Bereich der Fassung vorgesehen ist.

Im Übrigen sind Weiterbildungen der Erfindung Gegenstand von Unteransprüchen.

Beim Lesen des Ausführungsbeispiels wird dem Leser klar, dass eine Reihe von Abwandlungen möglich sind.

In der Zeichnung sind Ausführungsbeispiele des Gegenstandes der Erfindung dargestellt. Es zeigen:
- Fig. 1: eine teilweise aufgebrochene Heckpartie eines Kraftfahrzeuges, in einer perspektivischen Dar- stellung, mit Blick gegen die Innenseite der Heckscheibe,
- Fig. 2: den prinzipiellen Aufbau des Heckscheibenrollos nach Fig. 1,
- Fig. 3: die Führungsschiene für das Rollo nach Fig. 1, in einem Querschnitt,
- Fig. 4: die Sockeleinrichtung für das Rollo nach Fig. 1, in einer vereinfachten Seitenansicht, von dem Fahrzeugheck her gesehen,
- Fig. 5: ein Endstück einer Sockeleinrichtung des Heck- scheibenrollos, in einer Ansicht auf das Endstück aus der Sicht der Wickelwelle, in Verbindung mit der eingesetzten Kuppeleinrichtung,
- Fig. 6: das Endstück nach Fig. 3 in derselben Ansicht, jedoch ohne Verbindungsbrücke und ohne Kuppelein- richtung,
- Fig. 7: die Kuppeleinrichtung alleine, in derselben Sicht wie die Kuppeleinrichtung in Fig. 3 zu sehen ist,
- Fig. 8: die Kuppeleinrichtung nach Fig. 5, in einer An- sicht auf die Rückseite, und
- Fig. 9: die Kuppeleinrichtung nach Fig. 5, in einer Draufsicht aus der Sicht der Führungsschiene.

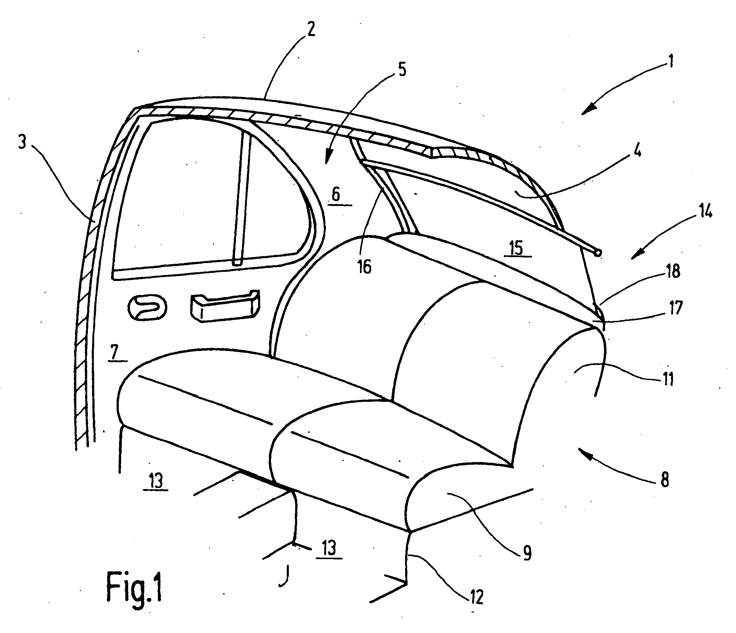

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, rechte Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogene Rollobahn sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Außerdem enthält die Hutablage 17 einen durchgehendenden Auszugsschlitz 18, aus dem die Rollobahn 15 herausläuft.

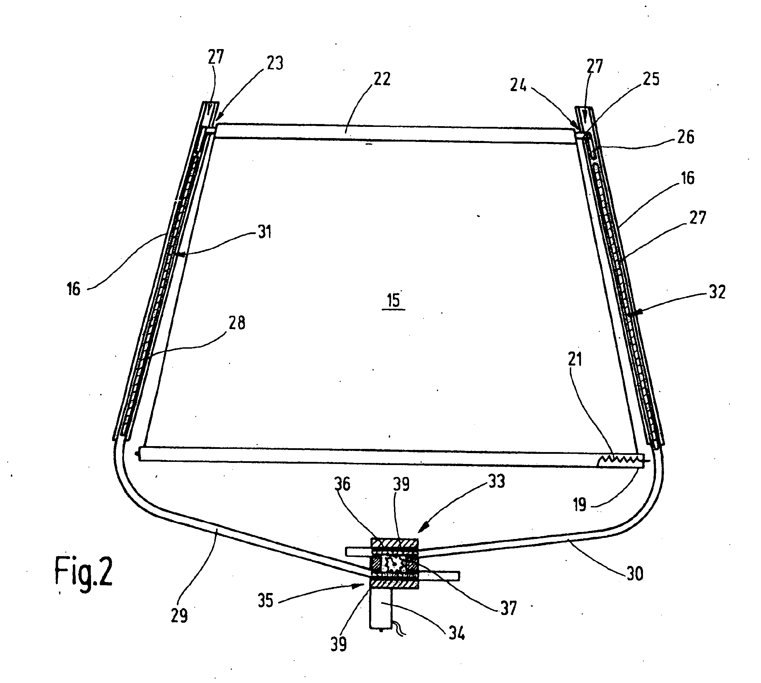

Der prinzipelle Aufbau des Heckscheibenrollos 14 ergibt sich aus Fig. 2.

Unterhalb der Hutablage 17 ist, wie sich aus Fig. 2 ergibt, eine Wickelwelle 19 drehbar gelagert, an der mit einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert und andernends in der Wickelwelle 19 festgelegt ist.

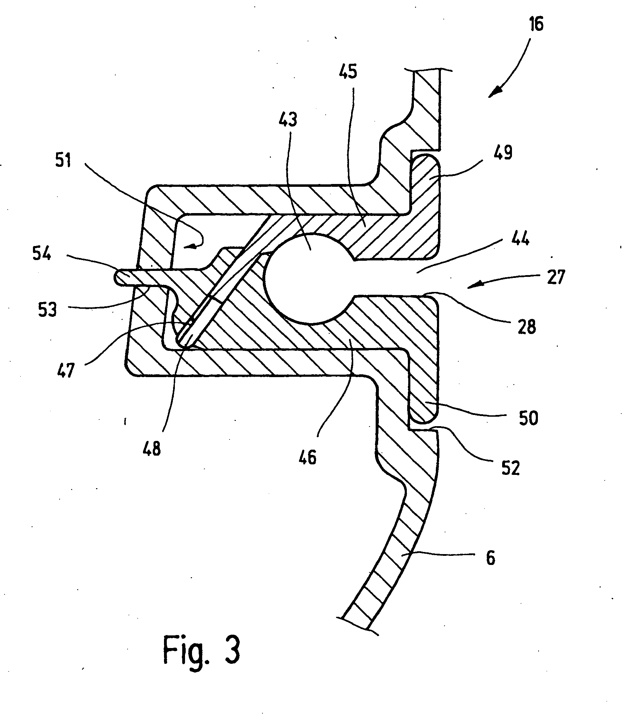

Die Rollobahn 15 weist einen etwa trapezförmigen Zuschnitt auf und ist an ihrer von der Wickelwelle 19 abliegenden Kante mit einer schlauchförmigen Schlaufe 22 versehen. Durch die schlauchförmige Schlaufe 22 führt ein rohrförmiges Auszugsprofil oder Spriegel, in dem Führungsstücke 23 und 24 teleskopartig gelagert sind. Die Führungsstücke 23 und 24 weisen einen Halsteil 25 auf, der einen kleineren Durchmesser aufweist als ein sich daran anschließendes Führungsglied 26, das die Gestalt eines kurzen zylinderförmigen Abschnitts aufweist. Die Führungsstücke 26 laufen in den Führungsschienen 16, die neben den beiden Seitenkanten des Heckfensters 4 angeordnet sind. Der Aufbau der Führungsschienen 16 ist weiter unten anhand der Fig. 3 erläutert.

Jede der Führungsschienen 16 enthält eine Führungsnut 27, die sich in Richtung auf die Rollobahn 15 in einem Führungs- oder Nutenschlitz 28 öffnet.

Das untere Ende jeder Führungsschiene 16 ist mit einem Führungsrohr 29, 30 verbunden, in denen ausknicksicher zwei biegsame Schubglieder 31 und 32 geführt sind. Die biegsamen Schubglieder 31 und 32 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 29 und 30 verbinden die Führungsschienen 16 mit einem Getriebemotor 33. Der Getriebemotor 33 setzt sich aus einem permanent erregten Gleichstrommotor 34 und einem Getriebe 35 zusammen auf dessen Ausgangswelle 36 ein Stirnzahnrad 37 drehfest sitzt. Das Zahnrad 37 kämmt mit den beiden Schubgliedern 31 und 32 formschlüssig. Diese Schubglieder 31 und 32 laufen tangential an die an diametral gegenüberliegenden Seiten an dem Stirnzahnrad 37 vorbei und sind hierzu in entsprechenden Bohrungen 38 und 39 geführt.

Durch Ingangsetzen des Getriebemotors 33 werden die Schubglieder 31, 32 wahlweise vorgeschoben oder zurückgezogen. Der Bewegung der Schubglieder 31, 32 folgen die Führungsstücke 23 und 24. Diese werden mit Hilfe des Federmotors 21 gegen die freien Enden der Schubglieder 31, 32 anliegend gehalten, die sich in den Führungsnuten 27 befinden.

Fig. 3 zeigt im Querschnitt den Aufbau der Führungsschienen 16 mit der darin enthaltenen Führungsnut 27.

Im Querschnitt gesehen setzt sich die Führungsnut 27 gedanklich aus einer Nutenkammer in Gestalt des kreisförmigen Abschnitts 43 und dem Nutenschlitz 28 in Gestalt des rechteckigen Abschnitts 44 zusammen. Der Durchmesser des kreisförmigen Abschnitts 43 ist an den Durchmesser der Führungstücke 26 angepasst. Der Abschnitt 44 bildet den Schlitz 28 mit einer Weite entsprechend dem Halsteil 25.

Die Führungsschiene 16 ist in Längsrichtung der Führungsnut 27 geteilt und setzt sich aus zwei Führungsschienenteilen 45 und 46 zusammen, die auf der Rückseite der Führungsschiene 16 miteinander verbunden sind. Dementsprechend ist ein Teil der kreisförmigen Nutenkammer 43 in dem Teil 45 und der restliche Bereich in dem Teil 46 ausgebildet. Beide Teile zusammen erzeugen, wie gezeigt, die Nutenkammer 43. Der Nutenschlitz 28 ist ebenfalls mit einer Wand an dem Teil 45 und der anderen Wand an dem Teil 46 ausgebildet.

Um die beiden Teile 45 und 46 miteinander zusammen zu halten, ist der Teil 46 an der Rückseite der Nutenkammer 43, also jener Seite, die dem Schlitz 28 gegenüber liegt mit äquidistant verteilten rechteckigen Durchgangsöffnungen 47 versehen. Durch diese Öffnungen 47 führen Zapfen 48, die von dem Teil 45 ausgehend und entsprechend schräg ausgerichtet sind.

Außerdem tragen die beiden Teile 45 und 46 auf der Sichtseite von dem Schlitz 28 weg zeigende leistenförmige Flansche 49 und 50.

Die Führungsschiene 16 ist, wie gezeigt, in dem Seitenverkleidungsteil 6 fest verrastet. Das Seitenverkleidungsteil 6 enthält hierzu eine dem Verlauf der Führungsschiene 16 entsprechende Nut 51, die in Richtung auf den Kraftfahrzeuginnenraum offen ist und dort Vertiefungen 52 aufweist, um die Flansche 50 und 49 bündig aufzunehmen.

Damit die Führungsschiene 16 sicher in der Nut 51 gehalten ist, enthält diese im Abstand voneinander angeordnete, rechteckige Öffnungen 53, durch die entsprechend äquidistant verteilte, rechteckige Zapfen 54 hindurch führen, die an der Rückseite mit Hilfe von angedeuteten hakenförmigen Nasen verrasten.

Um das Gebilde, bestehend aus der Wickelwelle 19, den Führungsrohren 29 und 30 sowie den Getriebemotor 35 bereits vor der endgültigen Montage in dem Kraftfahrzeug zusammen zu halten, ist eine Sockeleinrichtung 55 vorgesehen. Zu der Sockeleinrichtung 55 gehören zwei Endstücke 56a und 56b sowie eine Verbindungsbrücke 57, an der der Getriebemotor 35 befestigt ist.

Die beiden Endstücke 56a und 56b sind zueinander spiegelbildlich, so dass es genügt im Weiteren das Endstück 56a im Einzelnen weiter zu beschreiben.

Der Abstand der Endstücke 56a und 56b voneinander ist der Länge der Wickelwelle 19 entsprechend gewählt.

Die Darstellungen des Endstücks 56a ist in den Figuren stark vereinfacht, in dem Sinne, dass nicht jede Verstärkungsrippe widergegeben ist um die Zeichnung nicht mit Details zu überladen, die für das Verständnis der Erfindung nicht wesentlich sind. Es versteht sich von selbst, dass zum Zwecke der Materialersparnis geringe Wandstärken gewählt werden, und diese Bereiche durch entsprechende Stege, Pfeiler oder Rippen in der dem Fachmann geläufigen Weise verstärkt werden.

Im Übrigen ist das Endstück 56a, soweit nichts anderes angegeben ist, einstückig.

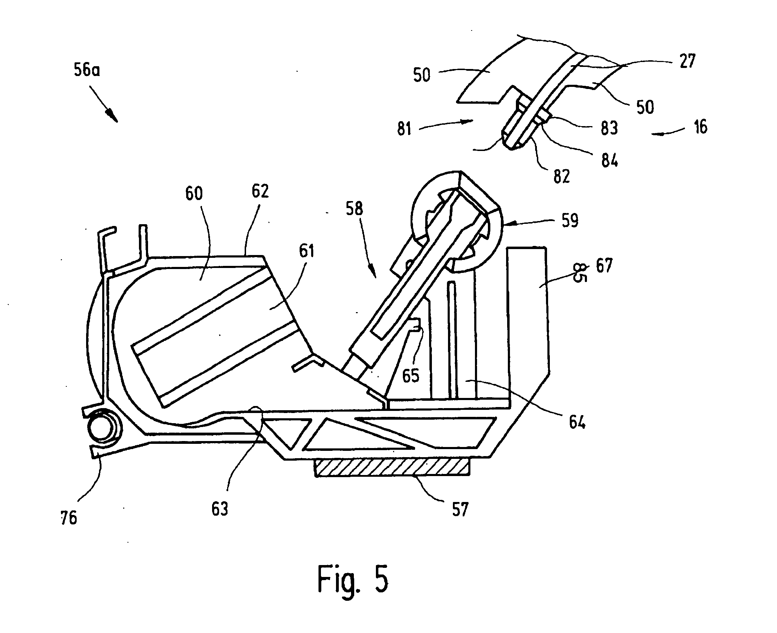

Fig. 5 zeigt das Endstück 56a in Verbindung mit einer Kuppeleinrichtung 58, die in einer Fassung 59 sitzt. Fig, 6 veranschaulicht das Endstück 56a ohne die Kuppeleinrichtung 58.

Zu dem Endstück 56a gehört eine Seitenwand 60 mit einer darin eingelassenen Haltenut 61 zur Aufnahme eines Lagerbocks für die Wickelwelle 19. Ein hierfür geeigneter Lagerbock ist beispielsweise in der DE 102 01 786 ausführlich erläutert. Eine gesonderte Erläuterung erübrigt sich, da der Aufbau des Lagerbocks für das weitere Verständnis der Erfindung nicht von Bedeutung ist.

Die Seitenwand 60 wird an drei Seiten von einem von der Seitenwand 59 aufragenden Kragen 62 umgeben, der eine Bodengruppe 63 bildet, mit deren Hilfe das Endstück 56a auf der Verbindungsbrücke 57 befestigt ist.

Von der Bodengruppe 63 ragt ein biegeelastischer Stiel 64 vor dem Ende der Seitenwand 60 auf, der an seinem oberen Ende die Fassung 59 für die Kuppeleinrichtung 58 einstückig trägt. Die Kuppeleinrichtung 58 ist dazu vorgesehen, mit der Führungsschiene 16 verbunden zu werden, wie dies weiter unten beschrieben ist.

Der Stiel 64 ermöglicht es der Fassung 59 sich sowohl begrenzt in Richtung parallel zur Zeichenebene als auch senkrecht zu der Zeichenebene gegenüber der Seitenwand 60 sowie der Bodengruppe 63 zu bewegen.

Zwischen der Seitenwand 16 und dem Stiel 64 befindet sich ein erster Anschlag 65, der an einem Arm 66 sitzt, der von der Bodengruppe 63 auftragt. Ein weiterer Anschlag 67 befindet sich an der gegenüberliegenden Seite und wirkt mit der Fassung 59 zusammen. Der Anschlag 67 ist ein von der Bodengruppe 63 aufragender, entsprechend gestalteter Arm.

Die Fassung 59 bildet eine Kugelpfanne mit einer Lagerfläche 68, die die Gestalt einer Kugelzone von ca. 180° Zentriwinkel hat. An den Enden der Kugelzone 68 bzw. kugelzonenförmigen Lagerfläche ragen zwei Rastlaschen 69 radial nach innen. Die Achse der Lagerfläche 68 ist, wie gezeigt, so ausgerichtet, dass sie mit der Richtung des benachbarten Endes der Führungsschiene 16 zusammenfällt, wenn die Führungsschiene 16 toleranzfrei sitzt.

Die Lagerfläche 68 öffnet sich in Richtung auf das gegenüberliegende Endstück 56b, um so in einer noch zu beschreibenden Art den Durchtritt der Führungsglieder 23 und 24 zu ermöglichen.

Unterhalb der Fassung 59 ist in einer an dem Stiel 64 weg stehenden Lasche ein Langloch 71 vorhanden, das als Begrenzungseinrichtung wirkt. Die Längsachse des Langloches 71 liegt rechtwinklig zu der Achse der Lagerfläche 68.

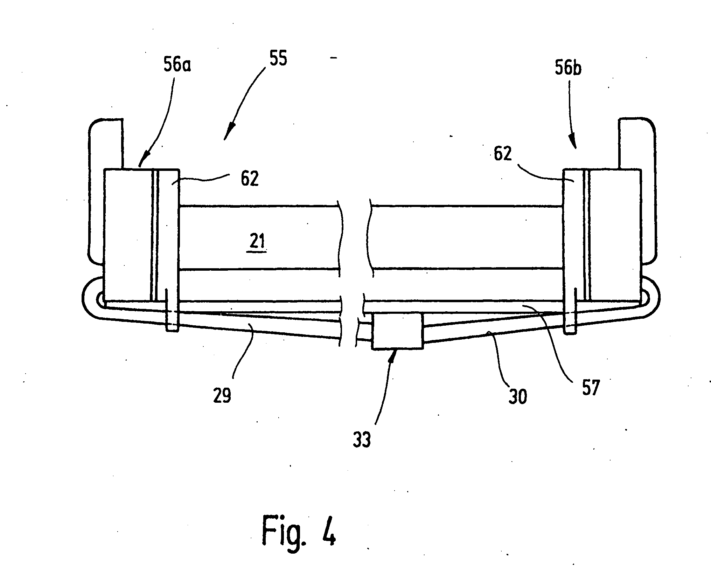

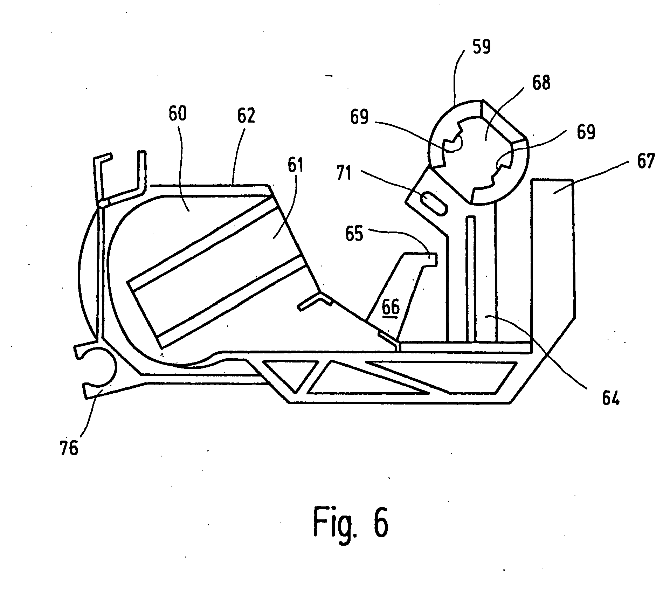

Die Kuppeleinrichtung 58 setzt sich einstückig aus einem kugelähnlichen Kopf 72 und einem im Wesentlichen zylindrischen Schaft 73 zusammen. Der kugelähnliche Kopf 72 ist dazu eingerichtet, in die Fassung 59 eingesetzt zu werden. Auf der dem Betrachter der Figuren 4 und 5, bzw. 6 zugekehrten Seite ist der Kopf 52 abgeplattet, wodurch eine Fläche 74 entsteht, die sich in den Schaft 73 fortsetzt und die bei montierten Kuppeleinrichtung 58 mit der dem Betrachter zugekehrten Stirnseite der Fassung 59 etwa bündig ist. Seitlich neben der Fläche 74 weist der Kopf 72 zwei Ausnehmungen 75 auf, die im montierten Zustand, wie Fig. 5 erkennen lassen, hinter den Rastnasen 69 liegen. Die Dimensionierung der Rastnasen 69 in Verbindung mit den Ausnehmungen 75 ergibt eine hinreichende Beweglichkeit des kugelförmigen Kopfes 72 in der Fassung 59.

Am von dem kugelförmigen Kopf 72 abliegenden Ende des Schaftes 73 ist das biegeelastische Führungrohr 29 befestigt, das im montierten Zustand an der Rückseite des Endstücks 56a vorbeiläuft und in einer Gabel 76 geführt ist, die an der Außenseite der Seitenwand 72 am Übergang zu der Bodengruppe 63 vorhanden ist.

An dem Schaft 73 steht etwa tangential ein Zapfen 77 vor, der im montierten Zustand in das Langloch 71 eingesteckt ist, und den Schwenkbereich der Koppeleinrichtung 58 um eine Achse senkrecht zur Zeichenebene von Fig. 5 begrenzt.

Auch die Koppeleinrichtung 58 enthält ein Stück der bereits beschriebenen Führungsnut 27 mit dem erläuterten Profil. Die Führungsnut 27 durchsetzt den kugelförmigen Kopf 72, verläuft ein Stück weit in den Schaft 73 und endet jedoch vor dessen unterem Ende. Hier ist der Schaft 73 lediglich rohrförmig. Die Nutenkammer liegt koaxial zu dem Schaft 73.

Der Schlitz 28 der Führungsnut 27 mündet in der Fläche 74.

An der Rückseite, d.h. jener Seite, die im montierten Zustand auf der Lagerfläche 68 liegt, enthält der kugelförmige Kopf 72 ein rechteckiges Fenster 78, in das eine Federzunge 79 hineinragt, die von dem Schaft 73 ausgeht. Die Federzunge 79 trägt eine in die Führungsnut 27 vorspringende Rastnase, die in einer weiter unten beschriebenen Weise mit einer nicht dargestellten Öffnung der Führungsschiene 16 zusammenwirkt.

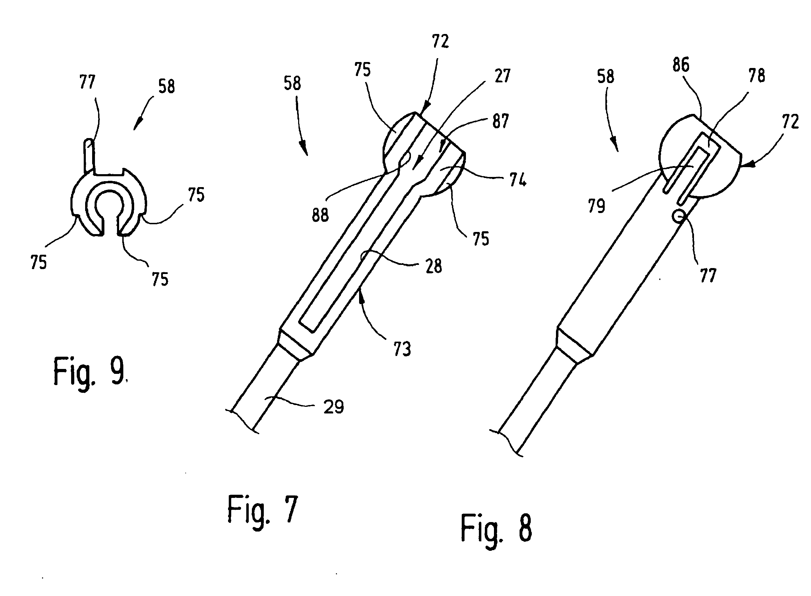

Um Fig. 7 nicht mit Details zu überladen, ist die Federzunge 79 und das zugehörige Fenster 78 lediglich in Fig. 8, nicht jedoch in Fig. 7, dargestellt. Hierdurch soll unter anderem Mehrdeutigkeit von Linien vermieden werden, die den Betrachter verwirren könnten.

Die Kuppeleinrichtung 58 hat den wesentlichen Zweck als Verbindungsglied oder Adapter zwischen dem flexiblen Führungsrohr 29 und der Führungsschiene 16 zu dienen. Um dies zu erreichen, ist die Führungsschiene 16 gemäß Fig. 5 an ihrem der Wickelwelle 19 benachbarten unteren Ende mit einem Steckzapfen 81 versehen. Der Steckzapfen 81 ist rotationssymmetrisch und setzt sich aus einem Abschnitt 82 mit geringerem Durchmesser und einem Abschnitt 83 mit größerem Durchmesser, zusammen. Die beiden Abschnitte 82 und 83 gehen an einer Kegelfläche 84 ineinander über. Außerdem läuft der Abschnitt 82 zum freien Ende des Zapfens 81 in einer Kegelfläche aus.

Der Zapfen 81 der Führungsschiene 16 verläuft in Verlängerung der dort enthaltenen Führungsnut 27, die sich mit unverändertem Querschnitt durch den Einsteckzapfen 81 bis zu dessen freien Ende fortsetzt. Die zylindrischen Außenumfangsflächen der Zapfenabschnitte 82 und 83 sind zu der Nutenkammer 43 koaxial.

Der Abschnitt 83 hat einen solchen Durchmesser, dass er tangential in die Außenseite der Leisten 50 übergeht.

Um das Zusammenstecken mit der Führungsschiene 16 zu ermöglichen, ist der kugelförmige Kopf 72 auf seiner dem Schaft 73 gegenüberliegenden Seite abgeplattet und bildet dort eine Fläche 86.

In dem kugelförmigen Kopf 72 ist ein zu dem Einsteckerzapfen komplementärer Einsteckkanal 87 ausgebildet, der von der Stirnfläche 86 ausgeht. Der Einsteckkanal 87 braucht im Einzelnen nicht dargestellt zu werden, weil er lediglich eine komplementäre Abbildung der Außenkontur des Einsteckzapfens 81 ist, wie dies in Fig. 5 gezeigt ist.

Die Länge des Einsteckkanals 87, ebenso wie die Länge des Einsteckzapfens 81, entsprechen etwa dem Durchmesser des kugelförmigen Kopfes 72.

Da, wie erwähnt, die Führungsnut 27 durch den Einsteckzapfen 81 verläuft, und ebenfalls durch die Koppeleinrichtung 58, entsteht auch im Bereich des kugelförmigen Kopfes 72 ein zur Flanke hin offener Schlitz 88, der jedoch wegen des vergrößerten Durchmessers des Einsteckkanals 87 gegenüber der Nutenkammer 43 eine entsprechend größere Weite zeigt.

Die Funktionsweise der gezeigten Anordnung ist wie folgt:

In jedes der Endstücke 56 wird die mit dem zugehörigen flexiblen Führungsrohr 29 bzw. 30 versehene Kuppeleinrichtung 58 eingesetzt. Dies geschieht, indem der kugelförmige Kopf 72 in die Fassung 59 eingedrückt wird, wobei die kugelförmige Außenfläche des Kopfes 72 mit der zonenförmigen Lagerfläche 68 in Anlage kommt. Im vollständig eingesetzten Zustand übergreifen in der in Fig. 5 dargestellten Weise die seitlichen Laschen 69 die Ausnehmungen 75. Dieses Eindrücken und Einrasten geschieht aufgrund einer elastischen Aufweitung der Fassung 59.

Die Laschen 69 sind so bemessen, dass die Koppeleinrichtung 58 in der Fassung 59 eine begrenzte Schwenkbewegung von ca. 5° in der Zeichenebene, und eine Schwenkbewegung um etwa 5° senkrecht zur Zeichenebene vollführen kann. Im eingesetzten Zustand verläuft der Schaft 73, wie gezeigt, ausgehend von der Fassung unter einem spitzen Winkel in Richtung auf die Bodengruppe 63. Das Führungsrohr 29 bzw. 30 läuft an der Außenseite der Seitenwand 60 vorbei, und wird in die Haltegabel 76 eingerastet.

Jedes der Endstücke 56a, 56b wird auf die vorbereitete und mit den Lagerböcken versehene Wickelwelle 19 aufgesteckt. Sodann wird die Verbindungsbrücke 57 befestigt, die die beiden Endstücke 56a und 56b miteinander verbindet. Es können der Antriebsmotor 35 an der Unterseite der Verbindungsbrücke 57 befestigt werden und die Führungsrohre 29 und 30 an dem Getriebegehäuse 35, wie gezeigt, angeschlossen werden.

Nunmehr werden durch den Einsteckkanal 87 hindurch die Schubglieder 31 und 32 eingeführt, wozu gleichzeitig der Motor 33 in Gang gesetzt wird, um die Schubglieder 31 und 32 soweit einzuziehen, bis ihre freien Enden am unteren Ende des Schlitzes 28 der Koppeleinrichtung 58 verschwunden sind.

Nunmehr werden ebenfalls vom oberen freien Ende der Kuppeleinrichtungen in den Einsteckkanal 87 die Führungsstücke 23, 24 des Auszugsprofils eingefädelt. Da der Federmotor 21, der sich in der Wickelwelle 19 befindet, ständig bestrebt ist, die Rollobahn 15 auf die Wickelwelle 19 aufzuwickeln, werden die Führungsstücke 23, 24 mit entsprechender Kraft in Richtung auf das untere Ende des Schlitzes 28 in den Schaft 73 gezogen. Die Vorspannkraft, die der Federmotor 21 zu entwickeln vermag, reicht aus, um das Auszugsprofil mit den Führungsstücken 23, 24 sicher in dem Stück Führungsnut 27 der Kuppeleinrichtungen 58 festzuhalten, selbst dann, wenn die Anordnung umgedreht wird und der Einsteckkanal 87 nach unten zeigt.

Nach dem beschriebenen Montagevorgang wird eine vormontierte Rollobaugruppe erhalten, die sich aus der Sockeleinrichtung 55 der Wickelwelle 19, dem Getriebemotor 33, den zugehörigen Führungsrohren 29, 30 mit den darin enthaltenen Schubgliedern 31, 32, der Rollobahn 15 und den bereits richtig positionierten Führungsstücken 23, 24 zusammensetzt. Die so erhaltene Einheit kann durch den Hersteller des Rollos an das Montageband des Kraftfahrzeugs geliefert und dort mit wenigen Handgriffen unter der Hutablage eingebaut werden.

Am Montageband werden, soweit dies noch nicht geschehen ist, die Führungsschienen 27 in die Seitenverkleidungsteile 6 eingerastet. Sie sind mit dem Seitenverkleidungsteilen 6 unlösbar verbunden.

Nach der Montage der Rollobaugruppe, unterhalb der Hutablage, werden die Seitenverkleidungsteile 6 für die C-Säulen eingesetzt und montiert. Bei dieser Montage wird der Einsteckzapfen 81 in den Einsteckkanal 87 eingefädelt. Der Einsteckzapfen 81 wird tief genug eingesteckt, bis die Federzunge 79 in der entsprechenden Rastöffnung des Einsteckzapfens 81 verrastet.

Die beiden Anschläge 65 und 67 sollen ein übermäßiges Ausweichen der Fassung 59 beim Einstecken des Einsteckzapfens 81 verhindern. Zum Einstecken des Einsteckzapfens 81 und zum Verrasten ist eine nicht unerhebliche Kraft erforderlich, die die Fassung 59 zur Seite wegdrücken würde. Um diese Ausweichbewegung zu begrenzen ist der Anschlag 66 vorgesehen.

Der Anschlag 67 soll eine Beschädigung des Stiels 64 verhindern, wenn während der Montage versehentlich zu stark an dem Seitenteil 6 gezogen wird.

Lagetoleranzen zwischen dem Einsteckkanal 87 und dem Einsteckzapfen 81 parallel zu der Zeichenebene und somit parallel zu der Längserstreckung des Fahrzeugs werden durch den biegsamen Stiel 64 ausgeglichen. In dieser Weise wird auch der Querversatz zwischen der Baugruppe und der C-Säule kompensiert. Der Winkelfehler zwischen dem Winkel des Einsteckzapfens 81 und dem Winkel des Einsteckkanals 87 wird durch die kugelgelenkartige Lagerung der Kupplungseinrichtung 58 in der Fassung 59 aufgenommen.

Nach der Montage besteht ein stufenfreier Übergang zur Führungsnut 27 der Kuppeleinrichtung 58 in die Führungsnut 27 der Führungsschiene 16. Durch betriebsmäßiges in Gang setzen des Getriebemotors 33 werden die Schubglieder 31 und 32, wie bereits erwähnt, in Richtung auf die Führungsschienen 16 vorgeschoben. Dabei schieben sie die Führungsstücke 23, 24 vor sich her und bewegen das an der Vorderkante der Rollobahn 15 vorhandene Auszugsprofil durch die Hutablage in Richtung auf die Oberkante des Heckfensters.

Beim Einfahren des Rollos werden die Schubglieder 31, 32 zurückgezogen, damit der Federmotor 21 die Rollobahn 15 wieder auf der Wickelwelle 19 aufwickeln kann. Am Ende der Einfahrbewegung befinden sich die Führungsstücke 23, 24 wieder in dem Stück Führungsnut 27, das sich in der Kuppeleinrichtung 58 befindet.

Ein Fensterrollo für Kraftfahrzeuge weist eine Sockeleinrichtung auf, in der die Wickelwelle drehbar gelagert ist. Außerdem ist die Sockeleinrichtung mit Kuppeleinrichtungen versehen, von denen die Führungsrohre für die Schubglieder ausgehen und zu dem Antriebsmotor führen. Die Kuppeleinrichtung weist einen Einsteckkanal auf, in den ein Einsteckzapfen der zugehörigen Führungsschiene, die mit dem Seitenverkleidungsteil fest verbunden ist, eingesteckt werden kann. Die Führungsnut führt durch den Einsteckzapfen hindurch, so dass nach der Montage das Auszugsprofil beliebig zwischen der Führungsschiene und der Kuppeleinrichtung hin und her bewegt werden kann, wenn die Rollobahn ein- bzw. ausgefahren wird.

## Patentansprüche

1. Fensterrollo für Kraftfahrzeuge,
mit einer drehbar gelagerten Wickelwelle (19),
mit einer Rollobahn (15), die mit einer Kante an der Wickelwelle (19) befestigt ist, und deren andere Kante an einem Auszugsprofil verankert ist,
mit wenigstens einer Führungsschiene (16), in der wenigstens ein Ende des Auszugsprofils (23,_24) geführt und die an ihrem der Wickelwelle (19) benachbarten Ende mit einem ersten Steckmittel (81) versehen ist,
mit wenigstens einer Sockeleinrichtung (55), die wenigstens eine Lagereinrichtung (61) für wenigstens ein Ende der Wickelwelle und eine Fassung (59) aufweist, und
mit einer Kuppeleinrichtung (58), die in der Fassung (59) sitzt und ein zweites Steckmittel (87) aufweist, das zu dem ersten Steckmittel (81) komplementär und kuppelbar ist, wobei die Kuppeleinrichtung (58) gegenüber der Sockeleinrichtung (55) schwenkbeweglich ist.

2. Fensterrollo nach Anspruch 1, **dadurch gekennzeichnet, dass** es eine Antriebseinrichtung (21,_31,_32,_33) aufweist.

3. Fensterrollo nach Anspruch 2, **dadurch gekennzeichnet, dass** die Antriebseinrichtung (21,_31,_32,_33) einen Elektromotor (33) und eine Federeinrichtung (21) aufweist.

4. Fensterrollo nach Anspruch 3, **dadurch gekennzeichnet, dass** der Elektromotor (33) mit der Wickelwelle und die Federeinrichtung (21) mit dem Auszugsprofil gekoppelt sind.

5. Fensterrollo nach Anspruch 3, **dadurch gekennzeichnet, dass** die Federeinrichtung (21) als Federmotor mit der Wickelwelle (19) gekuppelt ist und dass der Elektromotor (33) über Betätigungsglieder (31,_32) mit dem Auszugsprofil gekoppelt ist.

6. Fensterrollo nach Anspruch 1, **dadurch gekennzeichnet, dass** die Führungsschiene (16) eine hinterschnittene Führungsnut (27) aufweist.

7. Fensterrollo nach Anspruch 6, **dadurch gekennzeichnet, dass** sich die hinterschnittene Führungsnut (27) aus einer Nutenkammer (43) und einem Nutenschlitz (28,_44) zusammensetzt, über den die Nutenkammer (43) von außen her zugänglich ist, wobei die lichte Weite der Nutenkammer (43) größer als die lichte Weite des Schlitzes (28,_44) ist.

8. Fensterrollo nach Anspruch 1, **dadurch gekennzeichnet, dass** die Führungsschiene (16) eine Führungsnut (27) enthält, die sich über die Länge der Führungsschiene (16) mit konstantem Querschnittsprofil fortsetzt.

9. Fensterrollo nach Anspruch 1, **dadurch gekennzeichnet, dass** die Führungsschiene (16) mit einem Seitenverkleidungsteil (6) des Fahrzeugs verbunden ist.

10. Fensterrollo nach Anspruch 1, **dadurch gekennzeichnet, dass** die Führungsschiene (16), zumindest abschnittsweise, Bestandteil des Seitenverkleidungsteils (6) eines Kraftfahrzeugs ist.

11. Fensterrollo nach Anspruch 1, **dadurch gekennzeichnet, dass** das erste Steckmittel (81) steckerförmig gestaltet ist.

12. Fensterrollo nach Anspruch 1, **dadurch gekennzeichnet, dass** das erste Steckmittel (81) sich zum freien Ende hin verjüngt.

13. Fensterrollo nach Anspruch 1, **dadurch gekennzeichnet, dass** das erste Steckmittel (81) steckerförmig gestaltet ist und sich aus zwei Abschnitten (82,_83) zusammensetzt, von denen der dem freien Ende benachbarte Abschnitt (82) einen kleineren Durchmesser aufweist, als der, vom freien Ende weiter abliegende Abschnitt (83) und dass die beiden Abschnitte (82,_83) über eine Konus- oder KegelFläche (84) ineinander übergehen.

14. Fensterrollo nach Anspruch 13, **dadurch gekennzeichnet, dass** die Abschnitte (82,_83) im Wesentlichen rotationssymmetrisch und zueinander koaxial sind.

15. Fensterrollo nach Anspruch 6, **dadurch gekennzeichnet, dass** sich die Führungsnut (27) durch das erste Steckermittel (81) hindurch fortsetzt.

16. Fensterrollo nach Anspruch 1, **dadurch gekennzeichnet, dass** die Fassung (59) für die Kuppeleinrichtung (58) mit der Sockeleinrichtung (55) über einen federelastischen Stiel (64) verbunden ist.

17. Fensterrollo nach Anspruch 16, **dadurch gekennzeichnet, dass** der federelastische Stiel (64) eine Bewegung der Fassung (59) in Richtung parallel zu der Längsachse der Wickelwelle (19) ermöglicht.

18. Fensterrollo nach Anspruch 16, **dadurch gekennzeichnet, dass** der federelastische Stiel (64) der Fassung (59) eine Bewegung in Richtung auf die Wickelwelle (19) zu bzw. von dieser weg ermöglicht.

19. Fensterrollo nach Anspruch 17, oder 18, **dadurch gekennzeichnet, dass** die Bewegung der Fassung (59) in Richtung auf die Wickelwelle (19) zu bzw. von dieser weg durch Anschläge (65,_67) formschlüssig begrenzt ist.

20. Fensterrollo nach Anspruch 1, **dadurch gekennzeichnet, dass** die Fassung (59) mit der Kuppeleinrichtung (58) ein Gelenk (59,72) bildet.

21. Fensterrollo nach Anspruch 20, **dadurch gekennzeichnet, dass** das Gelenk (59,_72) wenigstens eine Drehachse aufweist.

22. Fensterrollo nach Anspruch 1, **dadurch gekennzeichnet, dass** die Sockeleinrichtung (55) mit der Kuppeleinrichtung (58) derart verbunden ist, dass diese bezüglich zweier voneinander beabstandeter und zu der Achse der Wickelwelle (19) paralleler Achsen schwenkbar ist.

23. Fensterrollo nach Anspruch 1, **dadurch gekennzeichnet, dass** die Fassung (59) derart angeordnet ist, dass sie ein Vorbeilaufen des Auszugsprofils (23,_24) an der Fassung (59) nicht behindert.

24. Fensterrollo nach Anspruch 1, **dadurch gekennzeichnet, dass** das die Fassung (59) die Gestalt einer Kugelpfanne aufweist, deren Innenfläche (68) eine Kugelzone ist, die in einem Bereich in Richtung parallel zur Längsachse der Wickelwelle (19) zeigt, offen ist.

25. Fensterrollo nach Anspruch 1, **dadurch gekennzeichnet, dass** die Fassung (59) mit Rastmitteln (69) zum formschlüssigen Verrasten der Kuppeleinrichtung (58) versehen ist.

26. Fensterrollo nach Anspruch 1, **dadurch gekennzeichnet, dass** das Kuppeleinrichtung (58) einen Kugelkopf (72) bildet, der mit der Fassung (59) verbindbar ist.

27. Fensterrollo nach Anspruch 1, **dadurch gekennzeichnet, dass** sich eine Führungsnut (27) für das Auszugsprofil (23,_24) ein Stück weit in die Kuppeleinrichtung (58) fortsetzt.

28. Fensterrollo nach Anspruch 7 und 26, **dadurch gekennzeichnet, dass** sich der Nutenschlitz (28) durch den kugelförmigen Kopf (72) fortsetzt.

29. Fensterrollo nach Anspruch 26, **dadurch gekennzeichnet, dass** die Kuppeleinrichtung (58) einen an den kugelförmigen Kopf (72) anschließenden Schaft (73) aufweist, dessen Durchmesser kleiner ist, als der Durchmesser des Kugelkopfes (72).

30. Fensterrollo nach Anspruch 7 und 29, **dadurch gekennzeichnet, dass** sich der Nutenschlitz (28) in den Schaft (73) fortsetzt.

31. Fensterrollo nach Anspruch 7 und 29, **dadurch gekennzeichnet, dass** der Schaft (73) rohrförmig ist.

32. Fensterrollo nach Anspruch 2, **dadurch gekennzeichnet, dass** mit der Kuppeleinrichtung (58) ein flexibles Rohr (29,30) verbunden ist, das der Führung eines Betätigungsgliedes (31,_32) dient, über das das Auszugsprofil (23,24) mit der Antriebseinrichtung (33) in wenigstens einer Betätigungsrichtung verbunden ist.

33. Fensterrollo nach Anspruch 1, **dadurch gekennzeichnet, dass** sich bei montiertem Fensterrollo die Sockeleinrichtung (55) unterhalb einer Hutablage (17) eines Kraftfahrzeugs befindet.

34. Fensterrollo nach Anspruch 1, **dadurch gekennzeichnet, dass** zu der Sockeleinrichtung (55) zwei Endstücke (56) und ein Verbindungsmittel (57) für die beiden Endstücke (56) gehören.

35. Fensterrollo nach Anspruch 34, **dadurch gekennzeichnet, dass** an dem Verbindungsmittel (57) ein Elektromotor (33) befestigt ist.

36. Fensterrollo nach Anspruch 34, **dadurch gekennzeichnet, dass** das Endstück (56) mit einer Fassung (59) zur Aufnahme einer zugehörigen Kuppeleinrichtung (58) versehen ist.

37. Fensterrollo nach Anspruch 1, d**adurch** gekennzeichnet, dass das zweite Steckmittel (87) als Buchse ausgeführt ist

38. Fensterrollo nach Anspruch 1, **dadurch gekennzeichnet, dass** die Kuppeleinrichtung (58) mit Rastmitteln (79) versehen ist, um die Steckverbindung zwischen der Kuppeleinrichtung (58) und der Führungsschiene (16) gegen ungewolltes Trennen während des Betriebs zu sichern.

39. Fensterrollo nach Anspruch 1, **dadurch gekennzeichnet, dass** der Fassung (59) und der Kuppeleinrichtung (58) eine Begrenzungseinrichtung (71,_77) zugeordnet ist, um die Relativbewegung zwischen der Kuppeleinrichtung (58) und der Fassung (59) zu begrenzen.

40. Fensterrollo nach Anspruch 39, **dadurch gekennzeichnet! dass** die Begrenzungseinrichtung (71,_77) eine Öse (71) bei der Fassung (59) und einen in die Öse (71) eingreifenden Zapfen (77) an der Kupplungseinrichtung (58) umfasst.

## Claims

1. Window roller blind for motor vehicles,
with a rotatably mounted winding shaft (19),
with a blind sheet (15), which is fastened at one edge to the winding shaft (19), the other edge of which is anchored to a pull-out profile,
with at least one guide rail (16), in which at least one end of the pull-out profile (23, 24) is guided and which is provided at its end adjacent to the winding shaft (19) with a first insert element (81),
with at least one base arrangement (55), which has at least one bearing means (61) for at least one end of the winding shaft and has a mounting (59), and
with a coupling means (58), which sits in the mounting (59) and has a second insert element (87), which is complementary to and can be coupled to the first insert element (81), wherein the coupling means (58) is movable in a pivoting manner in relation to the base arrangement (55).

2. Window roller blind according to claim 1, **characterised in that** it has a drive means (21, 31, 32, 33).

3. Window roller blind according to claim 2, **characterised in that** the drive means (21, 31, 32, 33) has an electric motor (33) and a spring arrangement (21).

4. Window roller blind according to claim 3, **characterised in that** the electric motor (33) can be coupled to the winding shaft and the spring arrangement (21) can be coupled to the pull-out profile.

5. Window roller blind according to claim 3, **characterised in that** the spring arrangement (21) is coupled to the winding shaft (19) as a spring motor, and that the spring motor (33) is coupled to the pull-out profile by means of actuating members (31,32).

6. Window roller blind according to claim 1, **characterised in that** the guide rail (16) has an undercut guide groove (27).

7. Window roller blind according to claim 6, **characterised in that** the undercut guide groove (27) consists of a groove chamber (43) and a groove slot (28, 44), via which the groove chamber (43) is accessible from the outside, wherein the width of the groove chamber (43) is larger than the width of the slot (28, 44).

8. Window roller blind according to claim 1, **characterised in that** the guide rail (16) contains a guide groove (27), which extends with a constant cross-sectional profile over the length of the guide rail (16).

9. Window roller blind according to claim 1, **characterised in that** the guide rail (16) is connected to a side lining section (6) of the vehicle.

10. Window roller blind according to claim 1, **characterised in that** the guide rail (16), at least in sections, forms part of the side lining section (6) of a motor vehicle.

11. Window roller blind according to claim 1, **characterised in that** the first insert element (81) is configured in the manner of a plug.

12. Window roller blind according to claim 1, **characterised in that** the first insert element (81) tapers towards the free end.

13. Window roller blind according to claim 1, **characterised in that** the first insert element (81) is configured in the manner of a plug and consists of two sections (82, 83), of which the section (82) adjacent to the free end has a smaller diameter than the section (83) further removed from the free end, and that the two sections (82, 83) merge into one another via a conical or tapered face (84).

14. Window roller blind according to claim 13, **characterised in that** the sections (82, 83) are substantially rotationally symmetric and coaxial to one another.

15. Window roller blind according to claim 6, **characterised in that** the guide groove (27) extends through the first insert element (81).

16. Window roller blind according to claim 1, **characterised in that** the mounting (59) for the coupling means (58) is connected to the base arrangement (55) by means of a flexible rod (64).

17. Window roller blind according to claim 16, **characterised in that** the flexible rod (64) allows the mounting (59) to move in a direction parallel to the longitudinal axis of the winding shaft (19).

18. Window roller blind according to claim 16, **characterised in that** the flexible rod (64) allows the mounting (59) to move towards the winding shaft (19) and away therefrom.

19. Window roller blind according to claim 17 or 18, **characterised in that** the movement of the mounting (59) towards the winding shaft (19) or away therefrom is restricted in a form-locking manner by stops (65, 67).

20. Window roller blind according to claim 1, **characterised in that** the mounting (59) forms a joint (59, 72) with the coupling means (58).

21. Window roller blind according to claim 20, **characterised in that** the joint (59, 72) has at least one rotational axis.

22. Window roller blind according to claim 1, **characterised in that** the base arrangement (55) is connected to the coupling means (58) in such a manner that this can be pivoted in relation to two axes spaced from one another and parallel to the axis of the winding shaft (19).

23. Window roller blind according to claim 1, **characterised in that** the mounting (59) is arranged in such a manner that it does not hinder the pull-out profile (23, 24) from running past the mounting (59).

24. Window roller blind according to claim 1, **characterised in that** the mounting (59) has the form of a ball socket, the inside surface (68) of which is the zone of a sphere, which is open and in one region points in a direction parallel to the longitudinal axis of the winding shaft (19).

25. Window roller blind according to claim 1, **characterised in that** the mounting (59) is provided with catch elements (69) for positive locking of the coupling means (58).

26. Window roller blind according to claim 1, **characterised in that** the coupling means (58) forms a ball head (72), which can be connected to the mounting (59).

27. Window roller blind according to claim 1, **characterised in that** a guide groove (27) for the pull-out profile (23, 24) extends a small distance into the coupling means (58).

28. Window roller blind according to claim 7 and 26, **characterised in that** the groove slot (28) extends through the ball-shaped head (72).

29. Window roller blind according to claim 26, **characterised in that** the coupling means (58) has a shank (73) adjoining the ball-shaped head (72), the diameter of which shank is smaller than the diameter of the ball head (72).

30. Window roller blind according to claim 7 and 29, **characterised in that** the groove slot (28) extends into the shank (73).

31. Window roller blind according to claim 7 and 29, **characterised in that** the shank (73) is tubular.

32. Window roller blind according to claim 2, **characterised in that** connected to the coupling means (58) is a flexible tube (29, 30), which serves to guide an actuating member (31, 32), by means of which the pull-out profile (23, 24) is connected to the drive means (33) in at least one direction of actuation.

33. Window roller blind according to claim 1, **characterised in that** when the window roller blind is mounted the base arrangement (55) is located below a parcel shelf (17) of a motor vehicle.

34. Window roller blind according to claim 1, **characterised in that** the base arrangement (55) includes two end pieces (56) and a connecting element (57) for the two end pieces (56).

35. Window roller blind according to claim 34, **characterised in that** an electric motor (33) is fastened to the connecting element (57).

36. Window roller blind according to claim 34, **characterised in that** the end piece (56) is provided with a mounting (59) to receive an associated coupling means (58).

37. Window roller blind according to claim 1, **characterised in that** the second insert element (87) is configured as a socket.

38. Window roller blind according to claim 1, **characterised in that** the coupling means (58) is provided with catch elements (79) to secure the plug connection between the coupling means (58) and the guide rail (16) against unintentional separation during operation.

39. Window roller blind according to claim 1, **characterised in that** the mounting (59) and the coupling means (58) have an associated restriction means (71, 77) to restrict the relative movement between the coupling means (58) and the mounting (59).

40. Window roller blind according to claim 39, **characterised in that** the restriction means (71, 77) comprises an eyelet (71) on the mounting (59) and a pin (77) engaging into the eyelet (71) on the coupling means (58).

## Revendications

1. Store à enrouleur pour véhicules automobiles,
comprenant un arbre d'enroulement (19) monté tournant,
comprenant une bande de store (15) qui est fixée par un bord à l'arbre d'enroulement (19) et dont l'autre bord est ancré sur un profilé de traction,
comprenant au moins un rail de guidage (16) dans lequel est guidée au moins une extrémité du profilé de traction (23, 24) et qui est pourvu d'un premier moyen enfichable (81), à son extrémité contiguë à l'arbre d'enroulement (19),
comprenant au moins un dispositif formant socle (55) qui présente au moins un dispositif de support (61) pour au moins une extrémité de l'arbre d'enroulement, et un châssis-support (59), et
comprenant un dispositif d'accouplement (58) qui est logé dans le châssis-support (59) et présente un deuxième moyen enfichable (87) qui est complémentaire du premier moyen enfichable (81) et peut être accouplé à celui-ci, le dispositif d'accouplement (58) pouvant pivoter par rapport au dispositif formant socle (55).

2. Store à enrouleur selon la revendication 1, **caractérisé par le fait qu'**il comporte un dispositif d'entraînement (21, 31, 32, 33).

3. Store selon la revendication 2, **caractérisé par le fait que** le dispositif d'entraînement (21, 31, 32, 33) présente un moteur électrique (33) et un dispositif à ressort (21).

4. Store selon la revendication 3, **caractérisé par le fait que** le moteur électrique (33) est accouplé à l'arbre d'enroulement et le dispositif à ressort (21) au profilé de traction.

5. Store selon la revendication 3, **caractérisé par le fait que** le dispositif à ressort (21), en tant que moteur à ressort, est accouplé à l'arbre d'enroulement (19), et **par le fait que** le moteur électrique (33) est accouplé au profilé de traction, par l'intermédiaire d'organes d'actionnement (31, 32).

6. Store selon la revendication 1, **caractérisé par le fait que** le rail de guidage (16) présente une rainure de guidage (27) en contredépouille.

7. Store selon la revendication 6, **caractérisé par le fait que** la rainure de guidage (27) en contredépouille se compose d'une cavité de rainure (43) et d'une fente de rainure (28, 44) par laquelle la cavité de rainure (43) est accessible de l'extérieur, la largeur libre de la cavité de rainure (43) étant supérieure à la largeur libre de la fente (28, 44).

8. Store selon la revendication 1, **caractérisé par le fait que** le rail de guidage (16) comporte une rainure de guidage (27) qui s'étend avec un profil transversal constant sur la longueur du rail de guidage (16).

9. Store selon la revendication 1, **caractérisé par le fait que** le rail de guidage (16) est relié à un élément d'habillage latéral (6) du véhicule.

10. Store selon la revendication 1, **caractérisé par le fait que** le rail de guidage (16) fait partie intégrante, du moins par portions, de l'élément d'habillage latéral (6) d'un véhicule automobile.

11. Store selon la revendication 1, **caractérisé par le fait que** le premier moyen enfichable (81) est conformé en connecteur.

12. Store selon la revendication 1, **caractérisé par le fait que** le premier moyen enfichable (81) se rétrécit en direction de son extrémité libre.

13. Store selon la revendication 1, **caractérisé par le fait que** le premier moyen enfichable (81) est conformé en connecteur et se compose de deux parties (82, 83) dont la partie (82) voisine de l'extrémité libre présente un diamètre plus faible que la partie (83) éloignée de l'extrémité libre, et **par le fait que** les deux parties (82, 83) se raccordent l'une à l'autre par une surface conique ou diminuée (84).

14. Store selon la revendication 13, **caractérisé par le fait que** les parties (82, 83) sont sensiblement symétriques de révolution et coaxiales l'une avec l'autre.

15. Store selon la revendication 6, **caractérisé par le fait que** la rainure de guidage (27) se prolonge dans le premier moyen enfichable (81).

16. Store selon la revendication 1, **caractérisé par le fait que** le châssis-support (59) pour le dispositif d'accouplement (58) est relié au dispositif formant socle (5) par un montant (64) ayant l'élasticité d'un ressort.

17. Store selon la revendication 16, **caractérisé par le fait que** le montant (64) ayant l'élasticité d'un ressort autorise un mouvement du châssis-support (59) dans la direction parallèle à l'axe longitudinal de l'arbre d'enroulement (19).

18. Store selon la revendication 16, **caractérisé par le fait que** le montant (64) ayant l'élasticité d'un ressort autorise un mouvement du châssis-support (59) en direction de l'arbre d'enroulement (19) et dans la direction opposée.

19. Store selon la revendication 17 ou 18, **caractérisé par le fait que** le mouvement du châssis-support (59) en direction de l'arbre d'enroulement (19) ou dans la direction opposée est limité par complémentarité de formes par des butées (65,67).

20. Store selon la revendication 1, **caractérisé par le fait que** le châssis-support (59) forme une articulation (59, 72) avec le dispositif d'accouplement (58).

21. Store selon la revendication 20, **caractérisé par le fait que** l'articulation (59, 72) présente au moins un axe de rotation.

22. Store selon la revendication 1, **caractérisé par le fait que** le dispositif formant socle (55) est relié au dispositif d'accouplement (58) de manière telle que ce dernier puisse pivoter par rapport à deux axes espacés l'un de l'autre et parallèles à l'axe de l'arbre d'enroulement (19).

23. Store selon la revendication 1, **caractérisé par le fait que** le châssis-support (59) est disposé de manière telle qu'il n'empêche pas le passage du profilé de traction (23, 24) devant le châssis-support (59).

24. Store selon la revendication 1, **caractérisé par le fait que** le châssis-support (59) présente la forme d'un coussinet sphérique dont la surface intérieure (68) est une zone sphérique qui est ouverte dans une région orientée dans la direction parallèle à l'axe longitudinal de l'arbre d'enroulement (19).

25. Store selon la revendication 1, **caractérisé par le fait que** le châssis-support (59) est pourvu de moyens d'encliquetage (69) pour le verrouillage par complémentarité de formes du dispositif d'accouplement (58).

26. Store selon la revendication 1, **caractérisé par le fait que** le dispositif d'accouplement (58) forme une tête sphérique (72) qui peut être reliée au châssis-support (59).

27. Store selon la revendication 1, **caractérisé par le fait qu'**une rainure de guidage (27) pour le profilé de traction (23, 24) se prolonge sur une certaine distance dans le dispositif d'accouplement (58).

28. Store selon les revendications 7 et 26, **caractérisé par le fait que** la fente de rainure (28) se prolonge dans la tête (72) en forme de sphère.

29. Store selon la revendication 26, **caractérisé par le fait que** le dispositif d'accouplement (58) présente une tige (73) qui se raccorde à la tête (72) en forme de sphère et dont le diamètre est inférieur au diamètre de la tête sphérique (72).

30. Store selon les revendications 7 et 29, **caractérisé par le fait que** la fente de rainure (28) se prolonge dans la tige (73).

31. Store selon les revendications 7 et 29, **caractérisé par le fait que** la tige (73) a une forme tubulaire.

32. Store selon la revendication 2, **caractérisé par le fait qu'**un tube (29, 30) souple est relié au dispositif d'accouplement (58) et sert au guidage d'un organe d'actionnement (31, 32) par l'intermédiaire duquel le profilé de traction (23, 24) est relié au dispositif d'entraînement (33), dans au moins un sens d'actionnement.

33. Store selon la revendication 1, **caractérisé par le fait que** lorsque le store est monté, le dispositif formant socle (55) se situe sous une plage arrière (17) d'un véhicule automobile.

34. Store selon la revendication 1, **caractérisé par le fait que** le dispositif formant socle (55) comporte deux pièces d'extrémité (56) et un moyen de liaison (57) pour les deux pièces d'extrémité (56).

35. Store selon la revendication 34, **caractérisé par le fait qu'**un moteur électrique (33) est fixé au moyen de liaison (57).

36. Store selon la revendication 34, **caractérisé par le fait que** la pièce d'extrémité (56) est pourvue d'un châssis-support (59) destiné à recevoir un dispositif d'accouplement (58) associé.

37. Store selon la revendication 1, **caractérisé par le fait que** le deuxième moyen enfichable (87) est réalisé sous forme de douille.

38. Store selon la revendication 1, **caractérisé par le fait que** le dispositif d'accouplement (58) est doté de moyens d'encliquetage (79) destinés à maintenir la liaison à enfichage entre le dispositif d'accouplement (58) et le rail de guidage (16), afin d'empêcher leur séparation non intentionnelle pendant le fonctionnement.

39. Store selon la revendication 1, **caractérisé par le fait qu'**un dispositif de limitation (71, 77) est associé au châssis-support (59) et au dispositif d'accouplement (58), afin de limiter le mouvement relatif entre ledit dispositif d'accouplement (58) et ledit châssis-support (59).

40. Store selon la revendication 39, **caractérisé par le fait que** le dispositif de limitation (71, 77) comprend un oeillet (71), situé près du châssis-support (59), et un doigt (77) situé sur le dispositif d'accouplement (58) et s'engageant dans l'oeillet (77).
